# EUROPÄISCHE PATENTSCHRIFT

(11) **EP 0 987 859 B1**
(45) Veröffentlichungstag und Bekanntmachung des Hinweises auf die Patenterteilung: **08.08.2007**
(21) Anmeldenummer: 99117299.0
(22) Anmeldetag: 02.09.1999
(51) Int. Cl.: H04L 12/56, H04L 29/06

(54) **Verfahren zur Behandlung verkehrsbezogener Vermittlungsdaten in Vermittlungsknoten von Kommunikationsnetzen**
Method for the processing of traffic-related switching data in switching nodes of communications networks
Méthode pour le traitement des données de commutation relatives au trafic dans des noeuds de commutation des réseaux de transmissions

(30) Priorität: 09.09.1998 DE 19841038
(43) Veröffentlichungstag der Anmeldung: 22.03.2000
(73) Patentinhaber: T-Mobile Deutschland GmbH, 53227 Bonn (DE)
(72) Erfinder: Keller, Walter, 40880 Ratingen (DE)
(74) Vertreter: Riebling, Peter

(56) Entgegenhaltungen:
- US-A- 3 775 566
- US-A- 4 575 844
- US-A- 5 008 900
- US-A- 5 398 245

## Beschreibung

Die vorliegende Erfindung betrifft ein Verfahren zur Behandlung verkehrsbezogener Vermittlungsdaten in Kommunikationsnetzen nach dem Oberbegriff des Anspruchs 1.

Es sind bereits Verfahren zur Behandlung verkehrsbezogener Vermittlungsdaten nach dem Stand der Technik bekannt. Dabei werden sowohl leitungsorientierte Verbindungen bezüglich raschem Verbindungsaufbau, wie auch paketorientierte Kommunikationsnetze hinsichtlich Übertragungssicherheit sowie Übertragungsgeschwindigkeit der einzelnen Datenpakete, optimiert. Dies trifft für die bestehenden Technologien (z.B. Datatec/Motorola u. Mobitex,Ericsson) sowie für die in ETSI- Standardisierung befindlichen GPRS- und UMTS-Verfahren (General Packet Radio Service, Universal Mobile Telecommunications System) zu.

Zum Stand der Technik wurde dazu die US 4 575 844 A recherchiert. Diese Druckschrift zeigt einen digitalen Kanalmultiplexer mit wenigstens einem schnellen-Speicher mit geringer Kapazität und einem langsameren Speicher mit großer Kapazität, sowie einem weiteren Speicher einen sogenannten File-Speicher. Sie weist insgesamt also drei Speicher mit jeweils unterschiedlichen Zugriffsgeschwindigkeiten auf. Eine Kontrolleinheit sorgt dafür, dass der schnelle Speicher in Verwendung kommt, wenn ein Anruf eingeht. Es wird dann der entsprechende Ausgangskanal angewählt. Insgesamt ist die Datensicherung so organisiert, dass bei bedarf der kleine, schnelle Speicher auf den größeren, langsameren Speicher zugreift um benötigte Daten auszulesen. Wenn diese jedoch nicht in dem langsameren Speicher vorhanden sind muß dieser seinerseits auf einen weiteren Speicher den File.Speicher zugreifen und die geforderten Daten auslesen. Hat der langsamere Speicher nun die Daten gespeichert, so kann er diese an den schnellen Speicher weitergeben. Das bedeutet, dass der Datentransfer z. T. einen massiven Zeitaufwand erfordert, da wenigstens vier Transferabläufe erforderlich sind, wenn der schnelle Speicher Daten benötigt, die aus dem File-Speicher ausgelesen werden müssen. Dies stellt jedoch ein unbefriedigendes Zeitverhalten in der Datenbeteitstellung dar, da jeder Datentransfer einen entsprechenden Zeit- und damit Performanceverlust verursacht.

Die US 3 775 566 A offenbart ein elektronisches Vermittlungssystem mit Zugriff auf einen schnellen und einen langsamen Speicher. Der langsame Speicher arbeitet mit dem schnellen Speicher derart zusammen, dass eine Datenübertragung zwischen den beiden Speichern möglich ist. Weniger oft verwendete Programme und Daten werden im langsamen Speicher abgelegt und bei Bedarf in den schnellen Speicher geladen, wo sie ausgeführt werden.

Bei dem UMTS-Verfahren handelt es sich um ein universales mobiles Telekommunikationssystem. Ziel des UMTS-Verfahren ist es einen weltweiten Standard für Mobilfunksysteme zu definieren. Dieser Standard schließt auch die Verknüpfung der Anwendungen mit bisher zellularen Systemen (GSM) ein. Nähere Informationen dazu sind in "Digitale Mobilfunksysteme" von David/Benkner im Teubnerverlag zu finden. Bei diesen Verbindungen spielt die Übertragungsgeschwindigkeit der paketorientierten Datenübertragung sowie deren zuverlässige und fehlerfreie Übermittlung eine wesentliche Rolle.

Die Optimierung der Übertragungsgeschwindigkeit erfordert dabei einen erheblichen Aufwand in den Vermittlungsknoten der Kommunikationsnetze, da die für die schnelle Paketvermittlung erforderlichen vermittlungsrelevanten Daten, insbesondere die kunden- und endgerätespezifischen Daten, Diensteparameter, Authentifikationsparameter etc., für eine schnelle Vermittlung in schnellen Speichereinrichtungen lokal in den Vermittlungsknoten vorgehalten werden müssen.

Diese Datenvorhaltung erfordert neben einem großen Speicheraufwand zusätzlich einen erheblichen Backupaufwand für die Datensicherung sowie einen erheblichen Aufwand für den Datenupdate zu redundanten Vermittlungsknoten. Der Aufwand steigt mit der Anzahl der erforderlichen Daten an, und kann neben dem hohen Speicher- und Datenverwaltungsaufwand im Extremfall dazu führen, daß kundenspezifische bzw. vermittlungsspezifische Daten oder dynamisch erstellte, konfigurierte oder geänderte Daten (beispielsweise Dienstparameter, Gebühreninformation, Routinginformation, Fehlerstatus etc.), die während einer Paketübertragung oder einer Übertragungsession entstehen, aus Performancegründen nicht permanent gesichert werden können und im Fehlerfalle, bzw. bei Wartung und Softwarereleasepflege etc. während der Umschaltung auf einen redundanten Vermittlungsknoten verloren gehen können.

Der vorliegenden Erfindung liegt deshalb die Aufgabe zugrunde die Datenhaltung in den Vermittlungsknoten von paketorientierten Kommunikationsnetzen durch ein Verfahren zur Minimierung der lokal vorzuhaltenden Daten, bezüglich der Übertragungszeiten der Datensicherheit und des Speicheraufwandes, zu optimieren.

Die Lösung der Aufgabe erfolgt erfindungsgemäß dadurch, daß die vermittlungsrelevanten Daten der Kunden und der Endgeräte, in den individuell verkehrslosen Zeiten der jeweils betroffenen Kunden, aus dem schnellen Speicher in einen langsameren und sicheren Datenspeicher, z. B. auf die Festplatte einer Datenbank, ausgelagert werden. Für jene Kunden und Endgeräte, für die mit großer Wahrscheinlichkeit in nächster Zukunft eine Kommunikation zu erwarten ist, werden nach einem festgelegten Bewertungsverfahren rechtzeitig vor der zu erwartenden Kommunikation die betreffenden Daten in den schnellen Speicher der Datenvermittlungseinrichtung geladen und für die Paketvermittlung zur Verfügung gestellt.

Dieses Auslagerungsverfahren bietet neben der Aufwandsreduzierung für schnelle Speicherkomponenten und den sicherheitsrelevanten Aspekten unter anderem noch den Vorteil, daß alle im Vermittlungsknoten gespeicherten Daten gleich behandelt werden, und daß das Auslagerungsverfahren selbst funktional von den Vermittlungsaufgaben getrennt werden kann.

Für den Fall, daß erforderliche Datensätze nicht rechtzeitig im schnellen Vermittlungsspeicher vorliegen, muß ein langsamerer Datenbankzugriff in Kauf genommen werden. Dieses Problem kann jedoch mittels geeigneter Strategien minimiert werden. So kann beispielsweise in einer Ausführungsform des Verfahrens eine automatische Beobachtung der Verkehrsbeziehungen stattfinden, und unter Zugrundelegung dieser Informationen die für die Vermittlung notwendigen Daten zur entsprechenden Zeit wieder in den schnellen Speicher geladen werden um einer Verzögerung bei der paketorientierten Datenvermittlung entgegenzuwirken.

In einer anderen Ausführungsform des Verfahrens können vertragliche Vereinbarungen über festgelegte Übertragungszeiten mit den Kunden getroffen werden. Dabei werden die für die Vermittlung notwendigen Daten ebenfalls zur entsprechenden Zeit wieder in den schnellen Speicher geladen, und stehen im Bedarfsfalle sofort abrufbar zur Verfügung.

Diese Ausführungsform des Verfahren ist u.a. besonders interessant für Endgeräte mit seltenen Datenübertragungen zu fest vorgegebenen Zeiten (z.B. Datenübertragung zu/von Automaten, unbemannten Stationen, EDV- Backup-Läufe etc).

Im folgenden wird die Erfindung anhand einer, lediglich einen Ausführungsweg darstellende Zeichnung, näher erläutert. Hierbei gehen aus der Zeichnung und ihrer Beschreibung weitere Merkmale und Vorteile der Erfindung hervor.

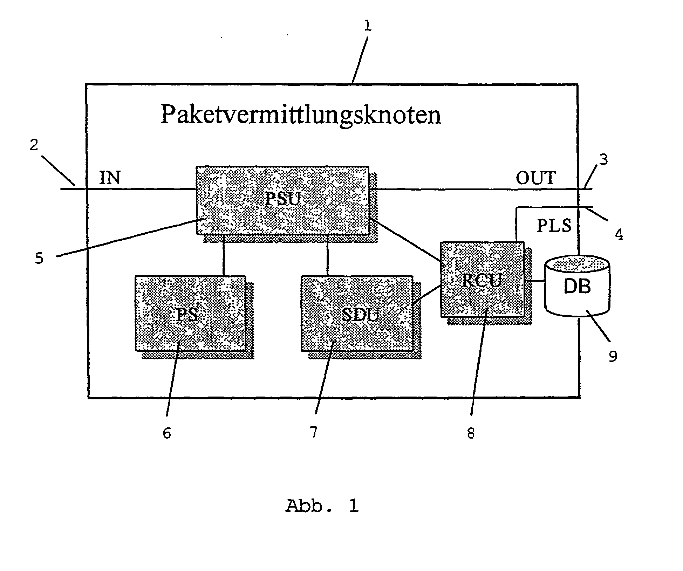

- Abb. 1: zeigt schematisch den Aufbau eines Vermittlungsknoten eines paketorientierten Kommunikationsnetzes

In der schematischen Darstellung in Abb. 1 sind beispielhaft die wichtigsten Komponenten eines paketorientierten Vermittlungsknotens dargestellt, die für das Verfahren zur Auslagerung von Vermittlungsdaten für Kunden oder Endgeräte aus dem schnellen Speicher in einen langsameren Speicher erforderlich sind. Bei den dargestellten Positionen handelt es sich um den Vermittlungsknoten 1, den Signaleingang 2, den Signalausgang 3, den Ladesignalausgang 4, die Paketvermittlungseinrichtung 5, den Paketspeicher 6, den Vermittlungsdatenspeicher 7, die Bewertungs- und Speichereinrichtung 8 und die Datenbank 9.

Die kunden- und gerätespezifischen Vermittlungsdaten, die bei der paketorientierten Übermittlung von Nachrichtendaten benötigt werden, werden erfindungsgemäß für den Zeitraum in dem sie nicht benötigt werden aus dem schnellen Vermittlungsdatenspeicher 7 in einen langsameren Hintergrundspeicher, in diesem Beispiel auf die Festplatte der Datenbank 9, ausgelagert. Bei Bedarf werden diese Vermittlungsdaten wieder aus dem langsameren Speicher in den schnellen Vermittlungsdatenspeicher 7 übertragen und für die Vermittlung der betreffenden Datenpakete zur Verfügung gestellt. So wird einerseits Speicherplatz im teuren Vermittlungsdatenspeicher 7 eingespart, und andererseits der Datenrefrech für die im Vermittlungsdatenspeicher 7 befindlichen Vermittlungsdaten auf ein notwendiges Minimum reduziert, indem nur die Vermittlungsdaten im schnellen Speicher vorgehalten werden, die aktuell für den raschen Verbindungsaufbau und weiter zur korrekten Datenübermittlung benötigt werden.

Bei Eintreffen der Paketdaten am Signaleingang 2 werden diese mit den kunden-und geräteorientierten Vermittlungsdaten für die paketorientierte Vermittlung anhand der Paketvermittlungseinrichtung 5 entsprechend verknüpft und am Signalausgang 3 des Paketvermittlungsknotens 1 zur Weiterleitung an einen weiteren Vermittlungsknoten oder an das entsprechende Endgerät zur Verfügung gestellt.

Die Vermittlungsdaten werden dabei in einer Ausführungsform der vorliegenden Erfindung auf Grund einer Vorhaltestrategie für relevante Daten, die sich durch Informationen aus der Beobachtung der Verkehrsbeziehungen im paketorientierten Kommunikationsnetz ergeben, aus dem lokalen langsamen Hintergrundspeicher der Festplatte der Datenbank 9 in den schnellen Vermittlungsdatenspeicher 7 geladen.

In einer weiteren Ausführungsform der vorliegenden Erfindung ist es vorgesehen die betreffenden Vermittlungsdaten auf Grund vertraglicher Regelung zu vorher bestimmten Zeitpunkten von dem lokalen langsameren Hintergrundspeicher in den schnellen Speicher zu laden, und für die Datenübermittlung bereitzustellen.

Es ist also vorgesehen, daß die Vermittlungsknoten 1 über eine Bewertungs- und Speichereinrichtung 8 verfügen, die über vorgegebene feste Zeiten oder alternativ nach statistischer Verkehrsanalyse und mathematischen Auslagerungsalgorithmen eine möglichst hohe Trefferquote für die Auslagerung und präventive Einlagerung von vermittlungsrelevanten Daten ermöglichen.

Nach Beendigung der Verbindung ist es Vorgesehen, die Vermittlungsdaten wieder in den langsameren Speicher auszulagern, um so wieder freien Platz im schnellen Speicher zu schaffen.

Eine weitere Ausführungsform der Erfindung sieht vor, daß die Bewertungskriterien für Aus- und Einlagerung, die Art und Ausführung der Speicherprozedur selbst sowie der Umfang der erforderlichen verbindungsorientierten Daten über entsprechende Verbindungs- und Signalisierungsverfahren von zentraler Stelle im Kommunikationsnetz geändert werden können.

Es ist vorgesehen, daß die Bewertungs- und Speichereinrichtung wahlweise lokal im Vermittlungsknoten direkt angeordnet, oder alternativ ausgelagert, ggf. an zentraler Stelle im Netz, angesiedelt sein kann. Weiters kann der Auslagerungsspeicher wahlweise lokal im Vermittlungsknoten direkt angeordnet, oder alternativ ausgelagert, ggf. an zentraler Stelle im Netz, angesiedelt sein kann.

Das erfindungsgemäße Verfahren kann in einer weiteren bevorzugten Anwendung in leitungsvermittelnden Kommunikationsnetzen, insbesondere in Mobilfunknetzen, zwecks Verkürzung der Verbindungsaufbauzeiten sowie zwecks Minimierung des netzinternen Signalisierungsaufwandes zum Einsatz kommen.

Bei einer weiteren Ausführungsform der vorliegenden Erfindung ist eine Signalisierungseinrichtung mit einem Ladesignalausgang 4 vorgesehen, die zu anderen Vermittlungsknoten 1 oder Einrichtungen im Kommunikationsnetz führt, wodurch eine Vorabinformation zwecks vorzeitigem Laden der vermittlungsrelevanten Daten, in der gleichen Art und Weise wie bereits in den bisher beschriebenen Ausführungsformen vorgesehen, in diesen Einrichtungen ermöglicht wird und somit der gesamte Verbindungsaufbau, bzw. die Paket-Vermittlung in Netzen mit mehr als einem beteiligten Vermittlungsknoten 1 beschleunigt wird.

### Zeichnungslepende und Beschreibung der Abkürzungen in der Abbildung

1. Vermittlungsknoten
2. Signaleingang
3. Signalausgang
4. Ladesignalausgang
5. Paketvermittlungseinrichtung
6. Paketspeicher
7. Vermittlungsdatenspeicher
8. Bewertungs- und Speichereinrichtung
9. Datenbank

- DB:: Datenbank
- PSU:: Paketvermittlungseinrichtung (Packet Switching Unit)
- PS:: Paketspeicher (Packet Store)
- SDU:: Vermittlungsdaten- Speicher (Switching Data Store)
- RCU:: Bewertungs- und Speichereinrichtungssystem (Rating & Cache Unit)
- PLS:: Lade- Signalisierung (Preliminary Load Signalling)

## Patentansprüche

1. Verfahren zur Behandlung von ermittlungsrelevanten Daten in Vermittlungsknoten von Kommunikationsnetzen **dadurch gekennzeichnet, daß** eine Einrichtung in den Vermittlungsknoten (1) besteht, die das Laden und Auslagern von vermittlungsrelevanten Daten zwischen einem Vermittlungsdatenspeicher (7) und einem im Vergleich zu diesem langsameren Hintergrundspeicher, zwecks Beschleunigung der Verbindungsaufbauphase bei leitungsvermittelnden Einrichtungen, und Beschleunigung der Paketvermittlungsphase innerhalb des paketorientierten Kommunikationsnetzes ermöglicht, wobei die vermittlungsrelevanten Daten vor dem Eintreten eines Verkehrsereignisses präventiv geladen und zwecks Entlastung der Vermittlungseinrichtung nach Beendigung des Verkehrsereignisses wieder in den Hintergrundspeicher ausgelagert werden, sofern kein weiteres bevorstehendes Verbindungsereignis absehbar ist.

2. Verfahren gemäß Anspruch 1 **dadurch gekennzeichnet, daß** Vermittlungsknoten (1) über eine Bewertungs- und Speichereinrichtung (8) verfügen, die nach statistischer Verkehrsanalyse und mathematischen Auslagerungsalgorithmen die Auslagerung und präventive Einlagerung der vermittlungsrelevanten Daten durchführt.

3. Verfahren gemäß Anspruch 1 **dadurch gekennzeichnet, daß** Vermittlungsknoten (1) über eine Bewertungs- und Speichereinrichtung (8) verfügen, die nach vorgegebenen festen Zeiten die Auslagerung und präventive Einlagerung der vermittlungsrelevanten Daten durchführt.

4. Verfahren gemäß einem der Ansprüche 1 bis 3 **dadurch gekennzeichnet, daß** die Bewertungskriterien für die Aus- und Einlagerung der vermittlungsrelevanten Daten, die Art und Ausführung der Speicherprozedur selbst sowie der Umfang der erforderlichen vermittlungsrelevanten Daten über entsprechende Verbindungs-und Signalisierungsverfahren von zentraler Stelle im Kommunikationsnetz geändert werden können.

5. Verfahren gemäß einem der Ansprüche 1 bis 4 **dadurch gekennzeichnet, daß** die Bewertungs- und Speichereinrichtung (8) lokal im Vermittlungsknoten (1) betrieben wird.

6. Verfahren gemäß einem der Ansprüche 1 bis 5 **dadurch gekennzeichnet, daß** eine Signalisierungseinrichtung zu anderen Verkehrseinrichtungen im Kommunikationsnetz besteht, wodurch eine Vorabinformation zwecks vorzeitigem Laden der vermittlungsrelevanten Daten in diesen Einrichtungen ermöglicht wird, und somit der gesamte Verbindungsaufbau, bzw. die Paket-Vermittlung in Netzen mit mehr als einem beteiligten Vermittlungsknoten beschleunigt wird.

7. Vorrichtung zur Durchführung eines Verfahrens zur Behandlung vermittlungsrelevanter Daten in Vermittlungsknoten von Kommunikationsnetzen gemäß den Ansprüchen 1-6,
bestehend aus einem Vermittlungsknoten (1) mit einer Paketvermittlungseinrichtung (5) mit einem Signaleingang (2) und einem Signalausgang (3), einem Paketspeicher (6), und einem Vermittlungsdatenspeicher (7),
**gekennzeichnet durch** eine Bewertungs- und Speichereinrichtung (8), die mit einer einen Hintergrundspeicher umfassenden Datenbank (9) verbunden ist und einen Ladesignalausgang (4) aufweist.

8. Vorrichtung gemäß Anspruch 7 **dadurch gekennzeichnet, daß** der Hintergrundspeicher in der Form einer Festplatte der Datenbank (9) lokal direkt im Vermittlungsknoten (1) angeordnet ist.

9. Vorrichtung gemäß Anspruch 7 **dadurch gekennzeichnet, daß** der Hintergrundspeicher in der Form einer Festplatte einer Datenbank (9) an zentraler Stelle im Netz angeordnet ist.

10. Vorrichtung gemäß einem der Ansprüche 7 bis 9 **dadurch gekennzeichnet daß** die Bewertungs- und Speichereinrichtung (8) lokal direkt im Vermittlungsknoten (1) angeordnet ist.

11. Vorrichtung gemäß einem der Ansprüche 7 bis 9 **dadurch gekennzeichnet daß** die Bewertungs- und Speichereinrichtung (8) an zentraler Stelle im Netz angeordnet ist.

12. Vorrichtung gemäß Anspruch 7 **dadurch gekennzeichnet daß** bei Leitungsverbindungssystemen die Paketvermittlungseinrichtung (5) als Leitungsvermittlungseinrichtung ausgebildet ist.

## Claims

1. Method for the processing of data relevant to switching in switching nodes of communications networks, **characterised in that** in the switching nodes (1) is a device which enables the loading and swapping out of data relevant to switching between a switching data memory (7) and a background memory slower than the latter, for the purpose of accelerating the connection set-up stage with line switching devices, and accelerating the packet switching stage within the packet-oriented communications network, the data relevant to switching being loaded preventively before a traffic event occurs and swapped back out to the background memory for the purpose of reducing the load on the switching device at the end of the traffic event if no further imminent connection event is foreseeable.

2. Method according to claim 1, **characterised in that** switching nodes (1) have an assessment and storage device (8) which, after statistical traffic analysis and mathematical swap-out algorithms, carries out swapping out and preventive swapping in of the data relevant to switching.

3. Method according to claim 1, **characterised in that** switching nodes (1) have an assessment and storage device (8) which, after predetermined fixed times, carries out swapping out and preventive swapping in of the data relevant to switching.

4. Method according to one of claims 1 to 3, **characterised in that** the assessment criteria for swapping the data relevant to switching in and out, the nature and execution of the storage procedure itself, and the scope of the necessary data relevant to switching, can be altered by corresponding connection and signalling methods from a central location in the communications network.

5. Method according to one of claims 1 to 4, **characterised in that** the assessment and storage device (8) is operated locally in the switching node (1).

6. Method according to one of claims 1 to 5, **characterised in that** there is a device for signalling to other traffic devices in the communications network, as a result of which prior information is enabled for the purpose of premature loading of the data relevant to switching in these devices, and so the whole connection set-up or packet switching in networks with more than one switching node involved is accelerated.

7. Apparatus for carrying out a method for the processing of data relevant to switching in switching nodes of communications networks according to claims 1-6, comprising a switching node (1) having a packet switching device (5) with a signal input (2) and a signal output (3), a packet memory (6), and a switching data memory (7), **characterised by** an assessment and storage device (8) which is connected to a database (9) including a background memory and comprises a loading signal output (4).

8. Apparatus according to claim 7, **characterised in that** the background memory is arranged locally directly in the switching node (1) in the form of a hard disk of the database (9).

9. Apparatus according to claim 7, **characterised in that** the background memory is arranged at a central location in the network in the form of a hard disk of the database (9).

10. Apparatus according to one of claims 7 to 9, **characterised in that** the assessment and storage device (8) is arranged locally directly in the switching node (1).

11. Apparatus according to one of claims 7 to 9, **characterised in that** the assessment and storage device (8) is arranged at a central location in the network.

12. Apparatus according to claim 7, **characterised in that** with line connection systems the packet switching device (5) is designed as a line switching device.

## Revendications

1. Procédé pour le traitement de données relatives à la commutation dans des noeuds de commutation de réseaux de communication, **caractérisé en ce qu'**il existe dans les noeuds de commutation (1) un dispositif qui permet le chargement et le transfert de données relatives à la commutation entre une mémoire de données de commutation (7) et une mémoire annexe, plus lente que celle-ci, en vue d'accélérer la phase d'établissement de communication dans le cas de dispositifs de commutation de lignes, et d'accélérer la phase de commutation de paquets à l'intérieur du réseau de communication par paquets, les données relatives à la commutation étant chargées préventivement avant l'apparition d'un événement de trafic et étant retransférées dans la mémoire annexe pour délester le dispositif de commutation, après la fin dudit événement, dans la mesure où aucun autre événement de communication imminent n'est en vue.

2. Procédé selon la revendication 1, **caractérisé en ce que** les noeuds de commutation (1) disposent d'un dispositif d'évaluation et de mise en mémoire (8) qui effectue suivant une analyse de trafic statistique et des algorithmes de transfert mathématiques le transfert et le stockage préventif des données relatives à la commutation.

3. Procédé selon la revendication 1, **caractérisé en ce que** les noeuds de commutation (1) disposent d'un dispositif d'évaluation et de mise en mémoire (8) qui effectue au bout de durées fixes prédéfinies le transfert et le stockage préventif des données relatives à la commutation.

4. Procédé selon l'une des revendications 1 à 3, **caractérisé en ce que** les critères d'évaluation pour le transfert et le stockage des données relatives à la commutation, le type et le mode de procédure de mise en mémoire et le volume des données relatives à la commutation qui sont requises peuvent être modifiés à partir d'un endroit central du réseau de communication grâce à des procédés de communication et de signalisation appropriés.

5. Procédé selon l'une des revendications 1 à 4, **caractérisé en ce que** le dispositif d'évaluation et de mise en mémoire (8) est commandé localement dans le noeud de commutation (1).

6. Procédé selon l'une des revendications 1 à 5, **caractérisé en ce qu'**il existe un dispositif de signalisation relié à d'autres dispositifs de trafic du réseau de communication, ce qui permet une information préalable en vue d'un chargement anticipé des données relatives à la commutation dans ces dispositifs et accélère ainsi l'ensemble de l'établissement de la communication et la commutation par paquets dans des réseaux avec plus d'un noeud de commutation impliqué.

7. Dispositif pour la mise en oeuvre d'un procédé pour le traitement de données relatives à la commutation dans des noeuds de commutation de réseaux de communication selon les revendications 1 à 6,
composé d'un noeud de commutation (1) comportant un dispositif de commutation par paquets (5) avec une entrée de signaux (2) et une sortie de signaux (3), une mémoire de paquets (6) et une mémoire de données de commutation (7),
**caractérisé par** un dispositif d'évaluation et de mise en mémoire (8) qui est relié à une banque de données (9) comprenant une mémoire annexe, et qui comporte une sortie de signaux de chargement (4).

8. Dispositif selon la revendication 7, **caractérisé en ce que** la mémoire annexe, sous la forme d'un disque dur de la banque de données (9), est disposée localement directement dans le noeud de commutation (1).

9. Dispositif selon la revendication 7, **caractérisé en ce que** la mémoire annexe, sous la forme d'un disque dur d'un banque de données (9), est disposée à un endroit central du réseau.

10. Dispositif selon l'une des revendications 7 à 9, **caractérisé en ce que** le dispositif d'évaluation et de mise en mémoire (8) est disposé localement directement dans le noeud de commutation (1).

11. Dispositif selon l'une des revendications 7 à 9, **caractérisé en ce que** le dispositif d'évaluation et de mise en mémoire (8) est disposé à un endroit central du réseau.

12. Dispositif selon la revendication 7, **caractérisé en ce que** dans le cas de systèmes de liaisons de lignes, le dispositif de commutation par paquets (5) est conçu comme un dispositif de commutation de lignes.
